# EUROPEAN PATENT APPLICATION

(11) **EP 2 866 303 A1**
(43) Date of publication of application: **29.04.2015**
(21) Application number: 13806226.0
(22) Date of filing: 20.06.2013
(51) Int. Cl.: H01R 9/05, B23K 20/10, H01R 4/02, H01R 43/00, H01R 43/02

(54) **JUNCTION CONSTRUCTION AND JUNCTION METHOD FOR JOINING A TERMINAL OF A COAXIAL CABLE WITH ANOTHER TERMINAL**

(30) Priority: 21.06.2012 JP 2012139500
(71) Applicant: Yazaki Corporation, Tokyo 108-0073 (JP)
(72) Inventor: KATO, Hajime, Kakegawa-shi Shizuoka 437-1421 (JP); TOMINE, Kazuhiro, Kakegawa-shi Shizuoka 437-1421 (JP); WATANABE, Yoshihiko, Susono-shi Shizuoka 410-1107 (JP); SUGIYAMA, Yoshitaka, Susono-shi Shizuoka 410-1107 (JP); MIYAJIMA, Takaaki, Kakegawa-shi Shizuoka 437-1421 (JP)
(74) Representative: Hoffmann Eitle
(86) International application number: PCT/JP2013/066961
(87) International publication number: WO 2013/191250

(57) **Abstract**

The present invention relates to a joint structure for joining an end (8) of an outer conductor (4) of a coaxial cable (1) in which the outer conductor (4) including a plurality of outer core wires (7) is coaxially and integrally formed with and around an inner conductor (2) via an insulation inner coat (3) with a terminal (9), a joint end (10) is formed by bending the plurality of outer core wires (7) in a direction crossing a longitudinal direction of the cable (1), and a joint portion (15) is formed by joining the joint end (10) with a conductor connection portion (12) of the terminal (9) disposed in a direction crossing an axial direction of the cable (1).

## Description

### TECHNICAL FIELD

The present invention relates to a joint structure and joining method between an end of a coaxial cable in which an inner conductor and an outer conductor are integrally formed via an insulator and a terminal.

### BACKGROUND ART

A patent literature 1 describes a shielded cable (coaxial cable) end connection structure of in which an inner conductor and an outer conductor are integrally formed via an insulator. A periphery of a core wire portion (inner conductor) of the shielded cable is covered with the insulator (insulation inner coat), on a periphery of which a shielded bundle body (outer conductors) is disposed, and a periphery of the shielded bundle body is covered with an insulator (insulation outer coat). In such a shielded cable, when a terminal is connected to an end of the shielded bundle body, a terminal portion of the insulator (insulation outer coat) covering the shielded bundle body is peeled off to expose the shielded bundle body, the shielded bundle body is twisted to an outside from the insulation outer coat to make the shield bundle body into one bundle, and then its end is connected to the terminal.

### CITATION LIST

### PATENT LITERATURE

Patent Literature 1: Japanese Patent Laid-Open Publication No. 7-201383

### SUMMARY OF INVENTION

### TECHNICAL PROBLEM

However, in the above described conventional shielded cable end connection structure, since the outer conductor is twisted to an outside, an exposed portion of the outer conductor is long. Therefore, when the end is accommodated in a connector, the connector itself is made larger since the exposed portion of the outer conductor needs to be accommodated therein.

Further, after the outer conductor is exposed, a work is required to unbind a plurality of core wires included in the outer conductor and to twist these core wires together. With this work, a problem may occur in which workability of a joining work for joining the end of the shielded cable with the terminal deteriorates.

Moreover, since the terminal is connected to the end with the core wires twisted together, if a state of twisting is uneven, the connection with the terminal may cause a trouble. Further, since, by the work of unbinding the core wires and twisting together, a stress is applied to the core wires, a problem may occur in which the core wires are damaged and reliability of the connection will decrease.

Thus, it is an object of the present invention to provide a joint structure and a joining method between an end of a coaxial cable and a terminal, wherein end processing is easily performed on the outer conductor and reliable joint with the terminal is enabled, while the connector is made more compact in accommodating the end of the outer conductor joined with the terminal in the connector.

### SOLUTION TO PROBLEM

To realize the above described object, the joint structure of the present invention according to an aspect of the present invention is a joint structure for joining the end of an outer conductor of the coaxial cable in which the outer conductor including a plurality of outer core wires is coaxially and integrally formed with and around an inner conductor via an insulation inner coat with the terminal, in which a joint end is formed by bending the plurality of outer core wires in a direction crossing a longitudinal direction of a cable, and a joint surface is formed on which the joint end is joined with a conductor connection portion of the terminal disposed in a direction crossing an axial direction of the cable.

In the joint structure of the present invention, it is preferable that, at the conductor connection portion, the joint surface and a cable insertion hole which is provided at a center of the joint surface and through which the cable is inserted be provided, and outer core wires of the outer conductor be radially bent with respect to the joint surface.

In the joint structure of the present invention, it is preferable that a terminal main body in a plate-like shape be formed continuously to the joint surface.

In the joint structure of the present invention, it is preferable that the inner conductor be formed of a plurality of inner core wires, the outer periphery of the plurality of inner core wires be covered with the insulation inner coat, each of the plurality of outer core wires be spirally disposed along an axial direction on the outer periphery of the insulation inner coat, and the outer periphery of the outer core wires be covered with the insulation inner coat.

The joining method of the present invention is a joining method for joining an end of an outer conductor of the coaxial cable in which the outer conductor including a plurality of outer core wires is coaxially and integrally formed with and around an inner conductor via an insulation inner coat with a terminal, the joining method including the steps of: bending a joint end of the plurality of outer core wires in a direction crossing a longitudinal direction of a cable; and ultrasonic joining the joint end with a joint surface in a state where the joint end is radially brought into contact with the joint surface of a conductor connection portion of the terminal disposed in a direction crossing an axial direction of the cable.

### BRIEF DESCRIPTION OF DRAWINGS

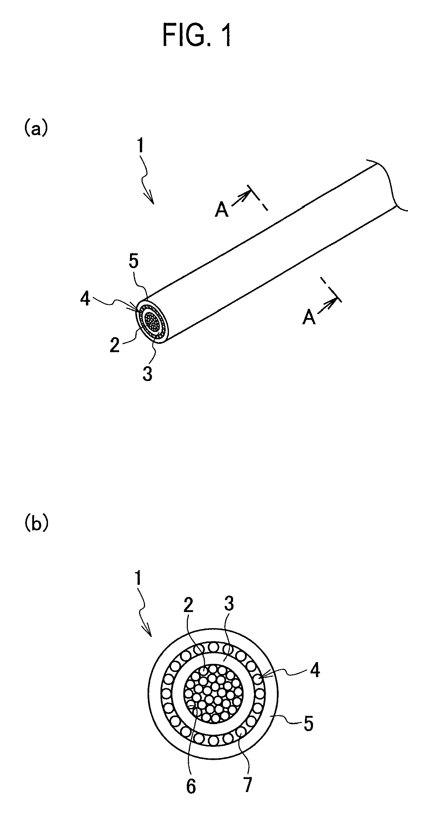

[Fig 1 Fig. 1 illustrates a coaxial cable, in which Fig. 1(a) is a perspective view and Fig. 1(b) is a cross-sectional view cut along a line A-A.

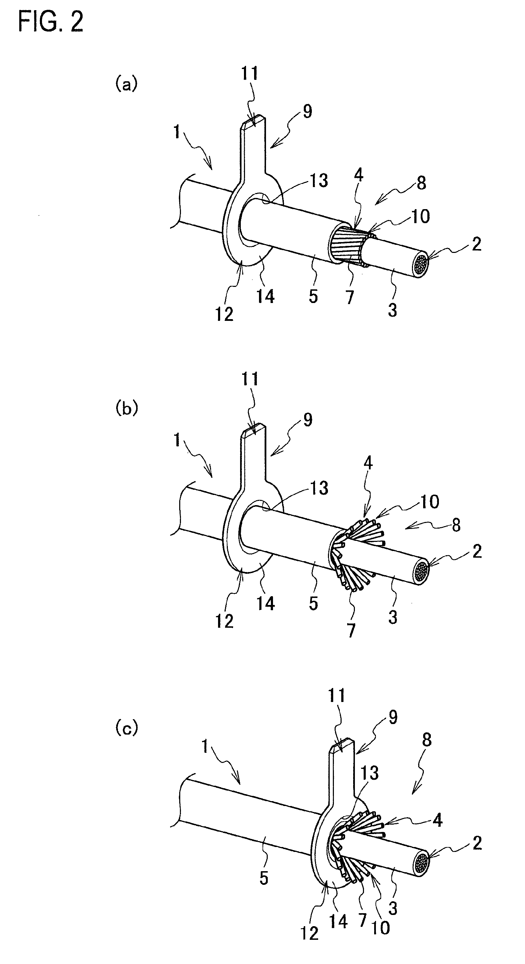

[Fig 2] Fig. 2 illustrates a state of a procedure for joining a terminal to an outer conductor of an end of the coaxial cable; in which Fig. 2(a) is a perspective view illustrating an end portion of the coaxial cable and the terminal to be joined with the end portion, Fig. 2(b) is a perspective view illustrating a state where a plurality of outer core wires forming the outer conductor of the coaxial cable is radially bent, and Fig. 2(c) is a perspective view illustrating a state where the terminal is disposed on a back face side of the outer core wires radially bent.

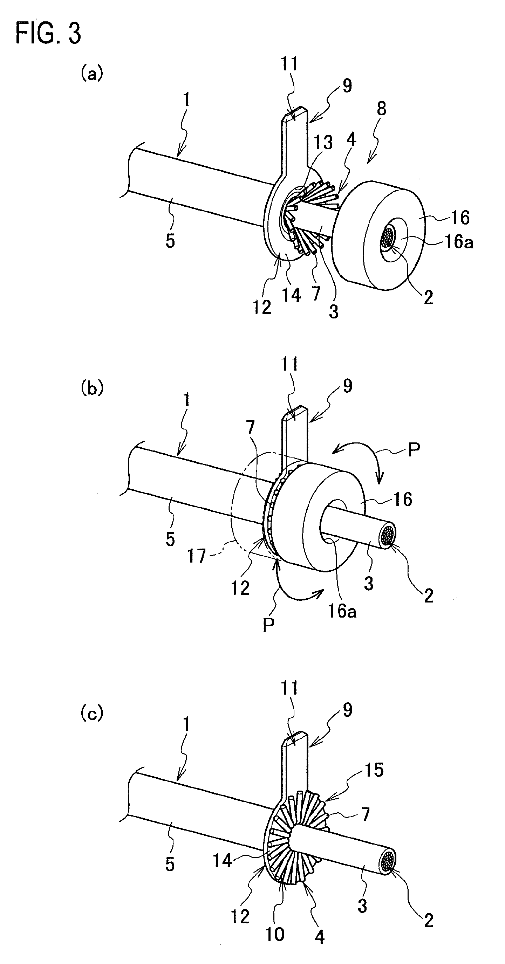

[Fig 3] Fig. 3 illustrates a state of procedure for joining the terminal with the outer conductor of the end of the coaxial cable; in which Fig. 3(a) is a perspective view illustrating a state where an ultrasonic horn is set from a state where the terminal is disposed on the back face side of the outer core wires radially bent, Fig. 3(b) is a perspective view illustrating a state where ultrasonic joining is performed with the ultrasonic horn, and Fig. 3(c) is a perspective view illustrating a state where a joint portion is formed by ultrasonically joining the joint surface of the terminal with the joint ends of the outer core wires radially bent.

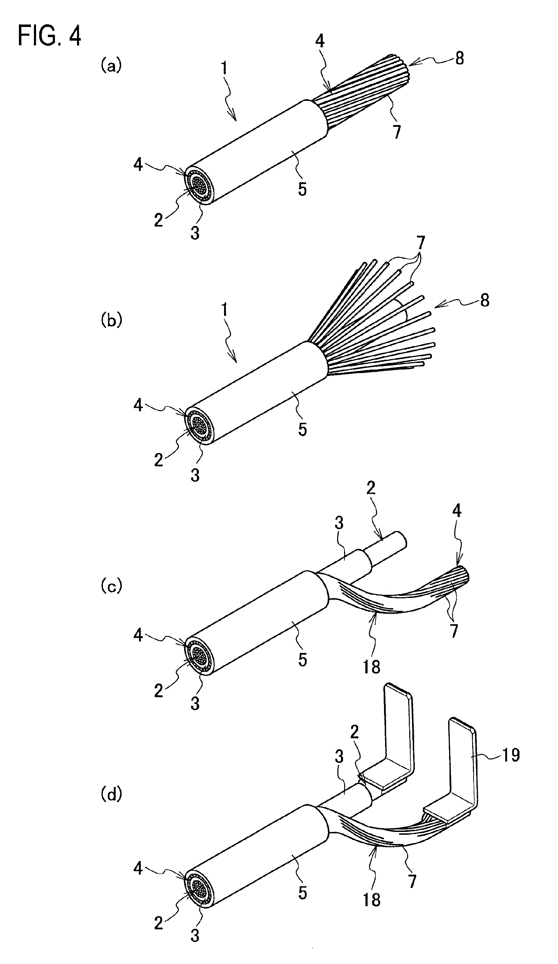

[Fig 4] Fig. 4 illustrates a state of procedure of joining the end of the coaxial cable with the terminal without using the joint structure of the present invention; in which Fig. 4(a) is a perspective view illustrating a state where the outer conductor is exposed, Fig. 4(b) is a perspective view illustrating a state where the plurality of outer core wires of the outer conductor is unbound, Fig. 4(c) is a perspective view illustrating a state where the plurality of outer core wires is twisted together, and Fig. 4(d) is a perspective view illustrating a state where the terminals are joined with the outer core wires twisted together.

### DESCRIPTION OF EMBODIMENTS

With reference to drawings, the embodiments of the present invention will be described below.

Fig. 1 illustrates a coaxial cable 1 of the present embodiment. The coaxial cable 1 is formed of an inner conductor 2 having a conductivity, an insulation inner coat 3 having an insulation property for covering an outer periphery of the inner conductor 2, an outer conductor 4 having a conductivity and provided over an entire outer peripheral area at an outer peripheral side of the insulation inner coat 3, and an insulation outer coat 5 having the insulation property for covering the outer peripheral side of the outer conductor 4.

The inner conductor 2 includes a plurality of inner core wires 6 having the conductivity. The outer conductor 4 provided at the outer peripheral side of the insulation inner coat 3 includes a plurality of outer core wires 7 having the conductivity. The outer core wires 7 described above are disposed along an axial direction (longitudinal direction) of the coaxial cable 1 adjacent to the entire peripheral area of the insulation inner coat 3, and are spirally wound on the periphery of the insulation inner coat 3 in such a manner as to circulate the periphery of the insulation inner coat 3. The outer peripheral side of the outer core wire 7 is covered with the insulation outer coat 5. Further, at an end 8 of the coaxial cable 1, the end of the outer core wires 7 is a joint end 10 where the end of the outer core wire 7 is joined with a terminal 9.

The terminal 9 to be joined with the end 8 of the coaxial cable 1 described above includes, as illustrated in Figs. 2(a) and 2(b), a terminal main body 11 in a plate-like shape and a conductor connection portion 12 in an annular shape integrally formed with the terminal main body 11. The terminal main body 11 in the plate-like shape is joined with an end of another cable. A conductor connection portion 12 has a disc-like shape and includes a cable insertion hole 13 at a center portion of the conductor connection portion 12, and an opening edge portion forming the cable insertion hole 13 is formed as a joint surface 14.

A joint structure between the end 8 of the coaxial cable 1 and the terminal 9 described above, as illustrated in Fig. 3(c), the joint end 10 is formed by bending a plurality of outer core wires 7 in the direction crossing the axial direction (longitudinal direction) of the coaxial cable 1 to form, and a joint portion 15 is formed by joining the joint end 10 of the outer core wires 7 with the conductor connection portion 12 of the terminal 9 disposed in the direction crossing the axial direction of the coaxial cable 1.

In other words, by removing the insulation outer coat 5 of the end portion of the coaxial cable 1, the plurality of outer core wires 7 included in the outer conductor 4 can be exposed. By bending the outer core wires 7 in the direction crossing the axial direction of the coaxial cable 1, the outer core wires 7 can be easily bent into a radial shape.

Next, the joining method between the end 8 of the coaxial cable and the terminal 9 will be described with reference to Figs. 2(a), 2(b) and 2(c), and Figs. 3(a), 3(b) and 3(c).

As illustrated in Fig. 2(a), the outer conductor 4 and the insulation outer coat 5 are cut off to expose the ends of the insulation inner coat 3 and the inner core wires 6 of the end 8 of the coaxial cable 1, and further the insulation outer coat 5 is cut off to expose the outer conductor 4. A length of the insulation outer coat 5 to be cut off is set to a length that can be accommodated in the joint surface 14 of the terminal 9 to be joined with the outer conductor 4. Further, the coaxial cable 1 is inserted through the cable insertion hole 13 of the terminal 9.

Next, as illustrated in Fig. 2(b), the plurality of outer core wires 7 of the outer conductor 4 is radially bent in the direction crossing the axial direction of the coaxial cable 1, and as illustrated in Fig. 2(c), the terminal 9 is disposed at a back face side (opposite side of the ends of the inner conductor 2 and the insulation inner coat 3) of the plurality of outer core wires 7 radially bent.

Subsequently, as illustrated in Fig. 3(a), a horn 16 having a cylindrical shape is inserted from an end side of the inner conductor 2 and the insulation inner coat 3 into a through hole 16a provided at a center of the horn 16, and as illustrated in Fig. 3(b), the plurality of outer core wires 7 that is previously bent are pressed to a side of the joint surface 14 of the terminal 9 so that the plurality of outer core wires 7 is sandwiched between the horn 16 and the joint surface 14. In this case, at a back face side of the terminal 9 (opposite side of the horn 16), a reception member 17 is previously disposed. From this state, the horn 16 is ultrasonically vibrated in a rotation direction "P" (direction in which the horn 16 is rotated in a clockwise direction and a counterclockwise direction about the axial direction of the coaxial cable 1).

With this arrangement, as illustrated in Fig. 3(c), the plurality of outer core wires 7 is radially welded onto the joint surface 14 to form the joint portion 15.

According to the joint structure and the joining method between the end 8 of the coaxial cable 1 and the terminal 9 in the above described embodiment, the joint end 10 formed by bending the plurality of outer core wires 7 included in the outer conductor 4 in the direction crossing the longitudinal direction of the coaxial cable 1 is joined with the conductor connection portion 12 of the terminal 9 disposed in the direction crossing the axial direction of the coaxial cable 1 to form the joint portion 15. Therefore, the outer conductor 4 has no exposed portion, and thus when the joint portion 15 is accommodated in the connector, the connector itself can be made more compact.

For example, when the joint structure of the present embodiment is not used, as illustrated in Figs. 4(a) and 4(b), after the end of the insulation outer coat 5 is peeled off and the plurality of outer core wires 7 of the outer conductor 4 is unbound, as illustrated in Fig. 4(c), the plurality of outer core wires 7 is twisted together into one piece of wire, then a trimming processing needs to be performed on a leading end portion of an exposed portion 18 of the outer conductor 4 that are twisted together to weld the terminals 19 to the leading end portions.

On the other hand, according to the joint structure of the present embodiment, since the outer core wires 7 have no exposed portion 18 at all, the connector itself can be made more compact when accommodating the joint portion 15 in the connector.

According to the joint structure of the present embodiment, when the joint portion 15 is accommodated in the connector, since the outer core wires 7 have no exposed portion 18 at all, possibilities of a short and leakage of electricity may be reduced between the exposed portion 18 of the outer core wire 7 and other electricity-conductive portions accommodated in the connector.

Further, since a work is not required in which the plurality of outer core wires 7 is unbound and twisted together only by bending the outer core wires 7 of the outer conductor 4 in the direction crossing the longitudinal direction of the coaxial cable 1, an end processing work of the outer conductor 4 can be easily performed.

Furthermore, since the joint end 10 can be formed only by bending the plurality of outer core wires 7 of the outer conductor 4 in the direction crossing the longitudinal direction of the coaxial cable 1, the work of twisting together the outer core wires 7 is not required, and thus the work for forming the joint end 10 can be evenly performed to reliably join the conductor connection portion 12 of the terminal 9. With this arrangement, contact reliability in the ultrasonic joining can be improved.

Since the end 8 of the coaxial cable 1 and the terminal 9 are reliably joined with each other by the ultrasonic joining at the joint portion 15, deterioration of a joining state caused by aging deterioration during a usage of the cables can also be reduced.

Further, according to the present embodiment, since the outer core wire 7 can be brought into contact with the joint surface 14 of the conductor connection portion 12 only by inserting the coaxial cable 1 through the cable insertion hole 13 provided in the conductor connection portion 12 of the terminal 9 and radially bending the outer core wires 7 of the outer conductor 4 in the direction crossing the axial direction of the coaxial cable 1, the work is not required in which the outer core wires 7 are twisted together and the outer core wires 7 are unbound, thereby easily performing the end processing work of the outer conductor 4.

Furthermore, since the outer core wire 7 radially bent is joined with the joint surface 14 directly, a weight required when being joined with the joint surface 14 in the plate-like shape is easily applied, and thus workability improves.

Moreover, since the outer core wire 7 radially bent is joined with the joint surface 14 in the plate-like shape, a joining position with the terminal 9 can be determined, thereby clarifying management in manufacturing.

In addition, since the work in which the plurality of outer core wires 7 is twisted together is not required, no stress is applied to the outer core wires 7, and when the end 8 of the coaxial cable 1 is connected with the terminal 9, the outer core wires 7 are not deteriorated, thereby improving reliability of the connection.

According to the above described embodiment, an example is described where the joint surface 14 of the terminal 9 has a circular shape and a center portion of the joint surface 14 is formed with the cable insertion hole 13, but, the joint surface 14 may be formed in a U-like shape, and the conductor connection portion 12 may not be formed in a circular shape or a ring-like shape.

Further, according to the above described embodiment, the example of the coaxial cable 1 including the plurality of outer core wires 7 each disposed in the spiral shape such that the outer conductor 4 circulates along the outer peripheral side of the insulation inner coat 3 is described, but, the present invention can be applied to the coaxial cable using a so-called braided wire as the outer conductor.

Furthermore, according to the above described embodiment, the insulation outer coat 5 is removed to expose the outer core wires 7, and before radially bending the outer core wires 7, the coaxial cable 1 is inserted through the terminal 9, but, the coaxial cable 1 may be inserted through the cable insertion hole 13 of the terminal 9 after radially bending the outer core wires 7.

Moreover, according to the above described embodiment, the example is described where a vibration direction of the horn 16 is the rotation direction, but, the vibration direction of the horn 16 may be in the axial direction (a direction close to or apart from the reception member 17) of the coaxial cable 1.

The present application claims the priority based on Japanese Patent Application No. 2012-139500 filed on June 21, 2012, and all contents of this application are incorporated into this specification by reference.

### INDUSTRIAL APPLICABILITY

According to the present invention, the joint end formed by bending the plurality of outer core wires included in the outer conductor in the direction crossing the longitudinal direction of the cable is joined with the conductor connection portion of the terminal disposed in the direction crossing the axial direction of the cable to form the joint surface, and thus, the outer conductor has no exposed portion, thereby making the connector itself more compact when the joint portion is accommodated in the connector.

Furthermore, the ultrasonic joining is performed in the state where the joint ends of the plurality of outer conductors of the end of the coaxial cable are bent in the direction crossing the axial direction of the cable and the joint ends of the plurality of outer conductors are radially brought into contact with the joint surface of the conductor connection portion of the terminal disposed in the direction crossing the axial direction of the cable, and thus the outer conductor and the terminal are joined with each other. With this arrangement, the outer conductor has no exposed portion, thereby making connector itself more compact when the joint portion is accommodated in the connector. Since the work in which the outer core wires are unbound and twisted together is not required, the end processing work of the outer conductor can be easily performed.

### REFERENCE SIGNS LIST

- 1: coaxial cable
- 2: inner conductor
- 3: insulation inner coat
- 4: outer conductor
- 5: insulation outer coat
- 6: inner core wire
- 7: outer core wire
- 8: end
- 9: terminal
- 10: joint end
- 12: conductor connection portion
- 15: joint portion

## Claims

1. A joint structure between an end of a coaxial cable and a terminal for joining an end of an outer conductor of the coaxial cable in which the outer conductor including a plurality of outer core wires is coaxially and integrally formed with and around an inner conductor via an insulation inner coat with the terminal, wherein
a joint end is formed by bending the plurality of outer core wires in a direction crossing a longitudinal direction of the cable, and a joint surface is formed on which the joint end is joined with a conductor connection portion of the terminal disposed in a direction crossing an axial direction of the cable.

2. The joint structure between an end of a coaxial cable and a terminal according to claim 1, wherein
the conductor connection portion includes the joint surface and a cable insertion hole which is provided at a center of the joint surface and through which the cable is inserted; and
the outer core wires of the outer conductor are radially bent with respect to the joint surface.

3. The joint structure between an end of a coaxial cable and a terminal according to claim 2, wherein
a terminal main body in a plate-like shape is formed continuously to the joint surface.

4. The joint structure between an end of a coaxial cable and a terminal according to any one of claims 1 to 3, wherein
the inner conductor is formed of a plurality of inner core wires and an outer periphery of the plurality of inner core wires is covered with the insulation inner coat;
each of the plurality of outer core wires is spirally disposed along an axial direction on an outer periphery of the insulation inner coat; and
an outer periphery of the outer core wires is covered with the insulation inner coat.

5. A joining method between an end of a coaxial cable and a terminal for joining an end of an outer conductor of the coaxial cable in which the outer conductor including a plurality of outer core wires is coaxially and integrally formed with and around an inner conductor via an insulation inner coat with the terminal, the joining method comprising the steps of:
bending a joint end of the plurality of outer core wires in a direction crossing a longitudinal direction of the cable; and
ultrasonically joining the joint end with a joint surface in a state where the joint end is radially brought into contact with the joint surface of a conductor connection portion of the terminal disposed in a direction crossing an axial direction of the cable.
